# EUROPEAN PATENT SPECIFICATION

(11) **EP 1 540 903 B1**
(45) Date of publication and mention of the grant of the patent: **19.07.2006**
(21) Application number: 02754036.8
(22) Date of filing: 14.08.2002
(51) Int. Cl.: H04L 12/58, H04L 29/06, H04Q 7/22

(54) **METHOD AND APPARATUS FOR PUSHING E-MAIL TO WIRELESS COMMUNICATION DEVICES**
VERFAHREN UND VORRICHTUNG ZUR ÜBERTRAGUNG ELEKTRONISCHER POST AUF DRAHTLOSE KOMMUNIKATIONSENDGERÄTE DURCH EIN PUSH-VERFAHREN
PROCEDE ET APPAREIL POUR DIFFUSER SELECTIVEMENT DE COURRIELS VERS DES DISPOSITIFS DE COMMUNICATION SANS FIL

(43) Date of publication of application: 15.06.2005
(73) Proprietor: Research In Motion Limited, Waterloo, Ontario N2L 3W8 (CA)
(72) Inventor: GILHULY, Barry, J., Waterloo, Ontario N2K 3P8 (CA); VAN, Ngoc, Anh, Brantford, Ontario N3R 5J7 (CA); PARRY, Thomas, Waterloo, Ontario N2L 6E5 (CA)
(74) Representative: Roberts, Gwilym Vaughan
(86) International application number: PCT/CA2002/001259
(87) International publication number: WO 2004/017583

(56) References cited:
- DE-U- 20 009 110
- CRISPIN M: "Internet Message Access Protocol - version 4rev1," INTERNET ARTICLE, December 1996 (1996-12), XP002122132 Retrieved from the Internet: <URL:www.imap.org/docs/rfc2060.html> [retrieved on 1999-11-08]
- NADEAU M: "YOUR E-MAIL IS OBSOLETE" BYTE, MCGRAW-HILL INC. ST PETERBOROUGH, US, vol. 22, no. 2, 1 February 1997 (1997-02-01), pages 66-69,72,74,, XP000680521 ISSN: 0360-5280

## Description

### BACKGROUND OF THE INVENTION

### Field of the Invention

The present invention relates generally to systems for "pushing" e-mail information to a plurality of wireless communication devices, and more particularly relates to an e-mail managing client which is configured to logon to a plurality of e-mail servers on behalf of a plurality of unaffiliated e-mail accounts for establishing and maintaining a single session connection with each e-mail server to receive e-mail change notification information for the accounts so that it may manage, retrieve, and push e-mail information to the plurality of wireless communication devices substantially in real time.

### Description of the Related Art

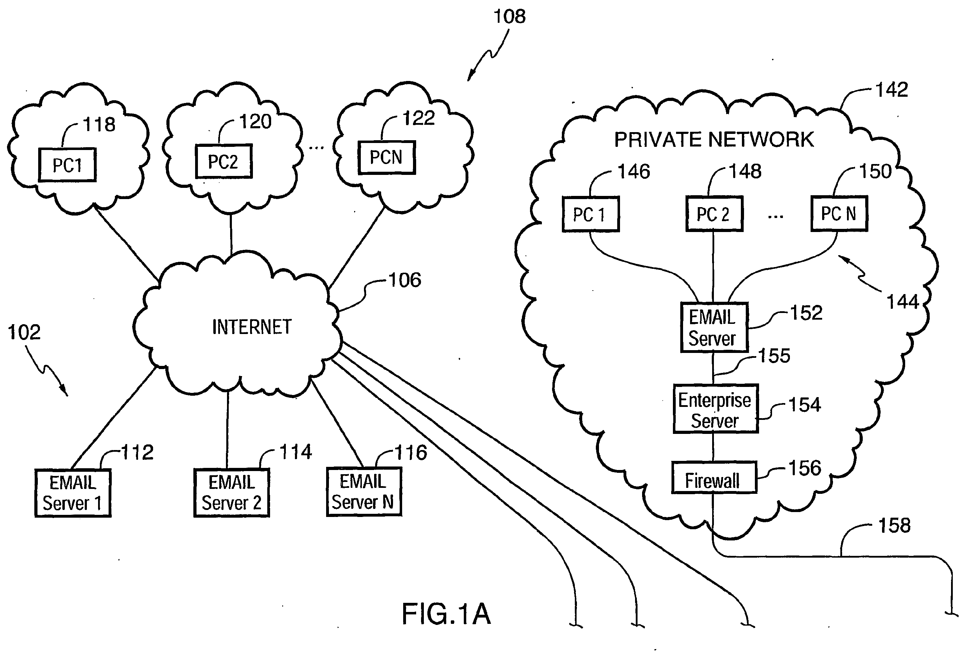

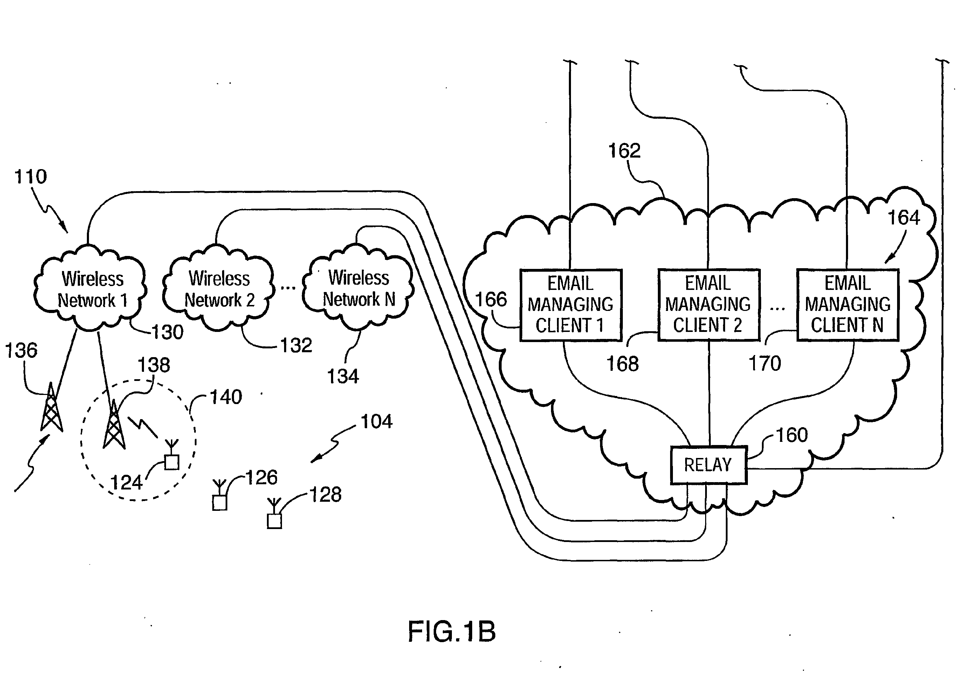

FIG. 1 is an illustration a system 100 in which e-mail information is pushed, in a conventional fashion, from an e-mail server 152 to a plurality of wireless communication devices 104. A private network 142, which may be a private local area network (LAN), includes e-mail server 152 as well as a plurality of computers 144, an enterprise server 154, and a firewall 156. Each end-user of computer 144 in private network 142 has an e-mail account managed by e-mail server 152 which operates in accordance with the well-known Post Office Protocol (POP) standard. Thus, the plurality of computers 144 may be used to connect to and access private e-mail messages from e-mail server 152 as is conventional. As apparent, all computers 144 operate within the same private network 142 that is governed and/or managed by the same single entity (e.g. the same company) and in that regard they are affiliated. There are only three (3) computers 144 shown in the figure for simplicity, namely, computers 146, 148, and 150 which are labeled as PC1, PC2, ..., through PCn, respectively.

Each computer 144 and/or its corresponding e-mail account is associated with a respective one of the wireless communication devices 104. Each wireless communication device 104 is portable and includes a hand-held housing with a display and a keyboard/keypad (e.g. miniature QWERTY-type keyboard), as well as a wireless transceiver, an antenna, and one or more processors which control the operation of the device. Each device 104 has the ability to send and receive e-mail information associated with the e-mail account managed by e-mail server 152. The e-mail information is received by each device 104 via a real-time automatic "push" methodology, in contrast to any method requiring devices 104 to invoke a connection for the receipt of e-mail information.

Enterprise server 154 facilitates the pushing of e-mail information from e-mail server 152 to the wireless communication devices 104. During system setup, a virtual private network (VPN) connection is established and maintained over a leased line 158 between enterprise server 154 and a relay 160. In addition, a single proprietary connection 155 is established and maintained between enterprise server 154 and e-mail server 152. For example, proprietary connection 155 may be a MAPI (Messaging Application Programming Interface) connection associated with Microsoft Exchange. When a new e-mail account is setup within private network 142, enterprise server 154 is supplied with the server address of e-mail server 152 (or another server) for association with the new account.

When changes to any of the e-mail accounts are detected at e-mail server 152 (e.g., new e-mail received, messages moved from one folder to another, etc.), e-mail server 152 sends e-mail change notification information in real time to enterprise server 154 over proprietary connection 155. The e-mail change notification information includes a notification identifier which uniquely identifies the e-mail change. When enterprise server 154 receives notification information for a particular account, it requests to receive e-mail information corresponding to the notification identifier by sending a message to the stored server address for the e-mail account. After enterprise server 154 receives the e-mail information, it pushes it to the appropriate wireless communication device through relay 160 and the wireless network currently serving the device. Although this conventional operation is described in relation to a single private network 142, the pushing of e-mail information is performed for multiple private networks simultaneously using the same relay 160. Such operation is described more particularly in pending application entitled "System and Method for Pushing Information from a Host System to a Mobile Data Communication Device", U.S. Serial No. 09/401,868, filed on September 23, 1999 and assigned to the current assignee of the present application.

The system described above operates efficiently and is suitable for handling affiliated e-mail accounts in a private network. However, Internet-based e-mail is moving to support what is known as the Internet Message Access Protocol (IMAP) standard for e-mail and message storage. IMAP was designed to replace the older POP method for mail access. IMAP's main strength is its ability to support multiple simultaneous accesses from many clients to one or more mailboxes. This allows more than one user or computer to access the same information without fear of failure or damage to the information storage area.

For wireless handheld mobile devices, pushing information in real time to notify a mobile device that mail has been received is a key feature. However, conventional IMAP was not designed to facilitate push-based message services for a large number of end-users in an efficient and scalable way. IMAP was designed similar to POP in that it focuses on a polling or connection-based solution such that clients need to connect to read their mail. E-mail notifications can be automatically delivered in real time using IMAP, but a single TCP/IP connection must be established and maintained for each e-mail account/mailbox in order to do so. Such known limitations make IMAP unable to scale well to support a large number of mobile device users. Polling for new data and/or changes is one option, but this mechanism fails as the number of users becomes high (e.g. in the thousands or hundreds of thousands). The number of physical IMAP servers to support such polling and connection demands would ultimately make the solution unmanageable for any operations center.

Accordingly, what is needed is a scalable and efficient system for pushing e-mail information from one or more e-mail servers to a plurality of wireless communication devices.

Patent reference DE-U-200 90 110 describes a system where e-mail information is sent to wireless devices. However, the reference fails to describe e-mail change notifications for a plurality of unaffiliated e-mail accounts which are received over a single connection for scalability. The reference also focuses on the conversion of e-mail messages into SMS messages or language messages for receipt by wireless devices, which is not a pure "pushing" of e-mail to wireless devices.

### SUMMARY OF THE INVENTION

The invention relates to a method, computer program product, system and device according to claims 1,9,15 and 27 respectively. Preferred embodiments are claimed in the dependent claims.

A system in which e-mail information is "pushed" from a plurality of e-mail servers to a plurality of wireless communication devices is described herein. Each e-mail server may be publicly accessible and manages a plurality of unaffiliated e-mail accounts respectively associated with the plurality of wireless communication devices. An e-mail managing client logs on to an e-mail server on behalf of the plurality of unaffiliated e-mail accounts and a TCP/IP connection is established and maintained therewith. Thereafter, e-mail change notification information for the plurality of unaffiliated e-mail accounts are received continually over the single TCP/IP connection. Based on the e-mail change notification information, e-mail information may be retrieved and pushed by the e-mail managing client for real time receipt by the plurality of wireless communication devices.

An e-mail server identifier and an e-mail notification identifier are provided with each e-mail change message so that requests to receive particular e-mail information can be properly facilitated. User-configurable delivery settings are also advantageously provided so that e-mail information may be pushed (if at all) as specified by the end-user.

Thus, a scalable and efficient system for pushing e-mail information from one or more e-mail servers to a plurality of wireless communication devices is advantageously provided.

### BRIEF DESCRIPTION OF THE DRAWINGS

FIGs 1A, 1B is an illustration of a system in which e-mail information is pushed from a plurality of e-mail servers to a plurality of wireless communication devices;
FIG. 2 is an illustration of a relevant portion of the system of FIG. 1 for describing details regarding the invention;
FIG. 3 is an illustration of general representative information associated with some of a plurality of unaffiliated e-mail accounts managed by each e-mail server; and
FIGs. 4A-4C form a flowchart which describes a method of pushing e-mail information from the plurality of e-mail servers to the plurality of wireless communication devices.

### DETAILED DESCRIPTION OF THE PREFERRED EMBODIMENTS

FIG. 1 is an illustration of a novel system 100 in which e-mail information is pushed from a plurality of e-mail servers 102 to a plurality of wireless communication devices 104. System 100 also includes private network 142 of the prior art as described in the Background of the Invention. E-mail servers 102 are coupled to a public network.106 such as the Internet. A plurality of computing devices 108 are also coupled to public network 106 for connecting to and accessing one of e-mail servers 102. An end-user of each computing device 108 has an e-mail account on one of e-mail servers 102 which stores and manages e-mail for the respective computing device.

Each computer device 108 and/or its corresponding e-mail account is associated with a respective one of the wireless communication devices 104 to which e-mail information is pushed. Each wireless communication device 104 is portable and includes a hand-held housing with a display and a keyboard/keypad (e.g. miniature QWERTY-type keyboard), as well as a wireless transceiver, an antenna, and one or more processors which control the operation of the device. Each device 104 has the ability to send and receive e-mail information associated with its e-mail account managed by one of e-mail servers 102. The e-mail information is received by each device 104 via a real-time automatic "push" methodology, in contrast to any method requiring devices 104 to invoke a connection for the receipt of e-mail information. Other e-mail accounts and information not associated with any wireless communication device are managed and stored on e-mail servers 102 as well. Other services may be provided for the wireless communication devices as well, such as telephone communications, Internet access, and other various data services.

Note that there are only three (3) computing devices 108 shown in FIG. 1 for simplicity, namely, computing devices 118, 120, and 122 which are labeled as PC1, PC2, ..., through PCn, respectively. Similarly, there are only three (3) e-mail servers 102 shown in the figure for simplicity, namely, e-mail servers 112, 114, and 116 which are labeled as e-mail server 1, 2, ..., n, respectively. Many additional e-mail servers, computing devices, and wireless communication devices can be utilized in actual practice.

In the embodiment described, computing devices 108 are computers such as desktop or , laptop PCs which may be connected to e-mail servers 102 via the Internet using any conventional means (e.g. telephone dial-up, cable, or DSL modem). End-users of the PCs are able to access their appropriate personal e-mail accounts for sending and receiving new e-mail, as well as reviewing, sorting, organizing, and otherwise managing previously received e-mail stored at the e-mail server. When an end-user of a computing device accesses e-mail, the end-user's computing device is used to connect to the e-mail server via the Internet using the appropriate Uniform Resource Locator (URL) associated with the e-mail provider or server. Using the computing device, the end-user sends his/her personal user name and password to log on to this e-mail server. If this user name and password information matches that stored at the e-mail server, the login is successful and an e-mail session is created so that the end-user can perform e-mail tasks.

Note that the computing devices 108 and their respective e-mail accounts are generally unaffiliated with each other; that is, they are not (necessarily) associated together with the same business or private network. For example, computing devices 118 and 120 are not utilized by the same company nor are they part of the same private network; in fact, computing device 118 may be utilized by a private individual A and computing device 120 may be utilized by a private individual B. The e-mail accounts associated with computing devices 108 may therefore be referred to as unaffiliated e-mail accounts.

Preferably, each one of e-mail servers 102 has e-mail software configured in accordance with the Internet Message Access Protocol (IMAP) standard. IMAP is a recently developed e-mail protocol and it attempts to solve some problems associated with the earlier Post Office Protocol (POP). With IMAP, all e-mail is stored on an e-mail server and specific messages are viewed as requested by a client. Separate folders can be created on the e-mail server for organizing various e-mail messages. Advantageously, e-mail messages in the end-user's inbox and other mail folders can be accessed from several different physical devices or machines which run an IMAP client program. One standards specification for IMAP is Request For Comments (RFC) 2060, but other related specifications, additions, and/or revisions may be applicable.

The pushing of e-mail information from e-mail servers 102 to wireless communication devices 110 is facilitated through a plurality of e-mail managing clients 164 and a relay 160 which is coupled to a plurality of wireless communication networks 110. Wireless networks 110 may be, for example, cellular telecommunication networks. There are only three (3) wireless communication networks 110 shown in the figure for simplicity, namely, wireless networks 130, 132, and 134 which are labeled as wireless networks 1, 2, ..., n, respectively. Similarly, there are only three (3) e-mail managing clients 164 shown in the figure for simplicity, namely, e-mail managing clients 166, 168, and 170 which are labeled as e-mail managing clients 1, 2, ..., n, respectively. Many additional e-mail managing clients and wireless networks can be utilized in actual practice.

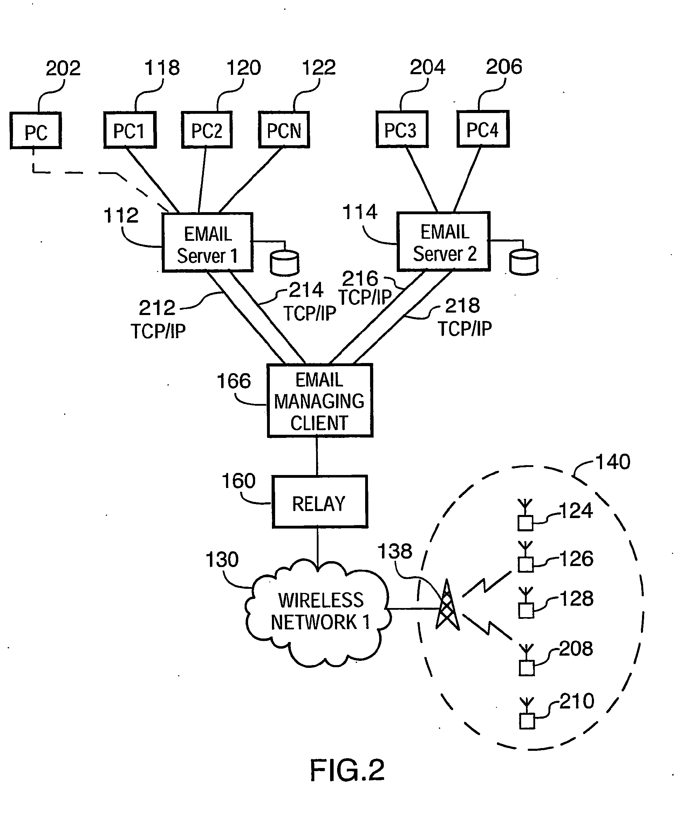

Referring now to FIG. 2, an illustration of a simplified relevant portion of the system of FIG. 1 is shown for describing further details of the present invention. FIG. 2 only shows e-mail servers 112 and 114, e-mail managing client 166, relay 160, wireless network 130, computing devices 118, 120, and 122 and wireless communication devices 124, 126, and 128 from FIG. 1, as well as additional devices which include computing devices 202, 204, and 206 and wireless communication devices 208 and 210. Computing devices 118, 120, and 122 are shown to be associated and/or connected with e-mail server 112, whereas computing devices 204 and 206 are shown to be associated and/or connected with e-mail server 114. Although shown in a dashed line to be connected to e-mail server 112, computing device 202 may be connected to either of e-mail servers 112 or 114 or to a different e-mail server of a private or public network. E-mail servers 112 and 114 are shown associated and/or connected to e-mail managing client 166.

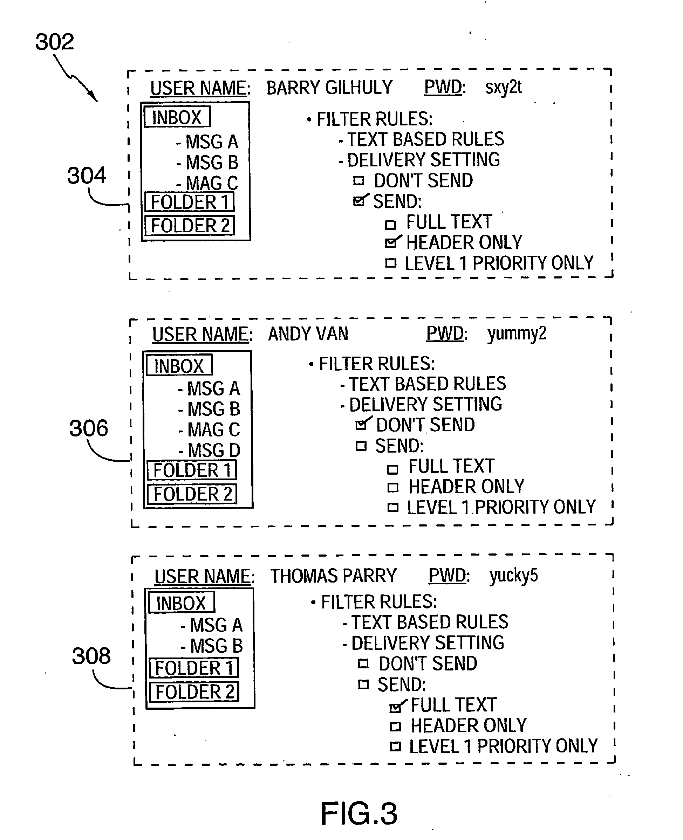

FIG. 3 shows general representative information of some of the plurality of unaffiliated e-mail accounts 302 which are stored and managed by each e-mail server 102 of FIGs. 1-2. In FIG. 3, there are only three (3) sets of e-mail account information shown for simplicity, namely, information relating to an e-mail account 304 in the name of "Barry Gilhuly"; information relating to an e-mail account 306 in the name of "Andy Van"; and information relating to an e-mail account 308 in the name of "Thomas Parry". As illustrated, each account has a user name and password associated therewith for security purposes. The information also includes the e-mail messages themselves, which are organized in folders such as an "Inbox" and various others including "Folder1" and "Folder 2".

Each e-mail account also has e-mail rule settings (or filter settings) associated therewith. The rule settings include conventional text-based filter settings as well as wireless communication device delivery settings. When a new e-mail message is received, the text-based filter settings are used by the e-mail server to, for example, route and store the new e-mail message into a specified folder based on specified text within a specified data field. On the other hand, the wireless communication device delivery settings are provided to specify whether and/or what e-mail information should be delivered to the wireless communication device associated with the e-mail account.

In the present example of FIG. 3, the delivery settings are indicative of whether or not to deliver the e-mail information to the wireless communication device and, if e-mail information is to be delivered, which portions of the e-mail information should be delivered. The e-mail information may include, but is not limited to, e-mail header information (data within TO, CC, FROM, and SUBJECT fields), e-mail delivery date and time, e-mail message text, and file attachments. Other suitable delivery settings may be specified, such as a Level 1 Priority setting which delivers e-mail information to the wireless communication device only when the e-mail message delivered is specified as Level 1 Priority by the sender. In the examples shown in FIG. 3, e-mail account 304 for "Barry Gilhuly" has a delivery setting of "ALWAYS SEND ONLY E-MAIL HEADER INFORMATION", e-mail account 306 for "Andy Van" has a delivery setting of "NEVER SEND E-MAIL", and e-mail account 308 for "Thomas Parry" has a delivery setting of "ALWAYS SEND FULL E-MAIL TEXT".

Preferably, the delivery settings may be changed by the end-user of a computing device (and/or wireless communication device) through an appropriate command or instruction, for example, when the computing device (and/or wireless communication device) is logged on to the e-mail server. Thus, the delivery settings are user configurable through the computing device and/or the wireless communication device.

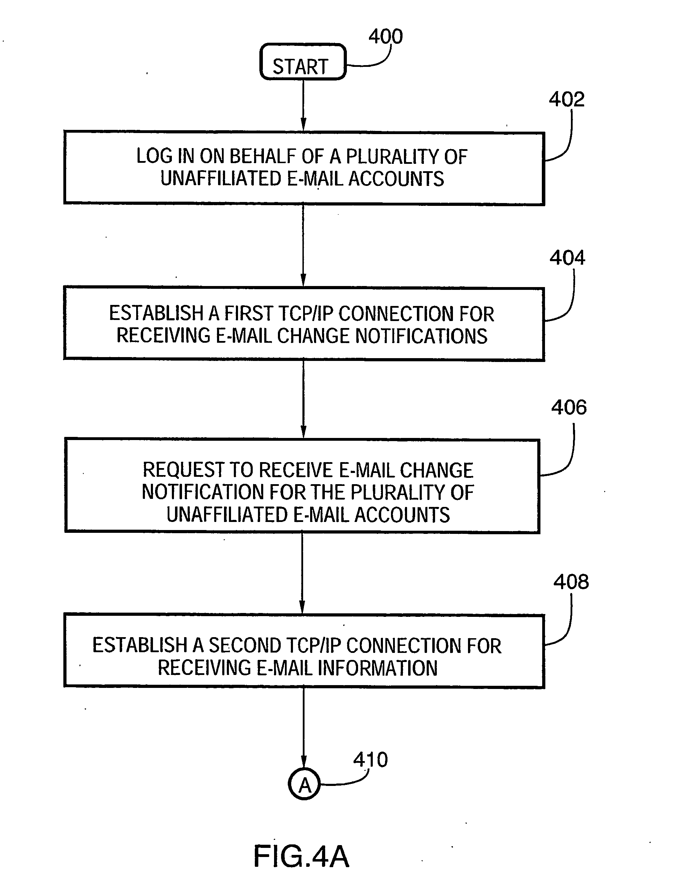

FIGs. 4A-4C form a flowchart which describes a method of pushing e-mail information from a plurality of e-mail servers to a plurality of wireless communication devices, in a system such as system 100 described in relation to FIGs. 1-3. The flowchart description begins with FIG. 4A, which relates to an e-mail notification setup method, which will be described in connection with FIG. 2. Beginning at a start block 400 of FIG. 4A, an e-mail managing client logs on to an e-mail server on behalf of a plurality of unaffiliated e-mail accounts (step 402). For example, in FIG. 2, e-mail managing client 166 may logon to e-mail server 112 on behalf of a plurality of unaffiliated e-mail accounts which include those accounts associated with computing devices 118, 120, and 122 (i.e., accounts 302 of FIG. 3).

In this step, the e-mail managing client may send a user name and password to log on to the e-mail server and, assuming that the user name and password matches that stored at the e-mail server, the login is successful and an e-mail session is created. For this e-mail session, the e-mail managing client has access rights (e.g. whether limited or full) for all of the plurality of unaffiliated e-mail accounts associated with wireless communication devices. The e-mail managing client's login session may be similar or the same as that of an administrative login session by an administrator who has access rights for a plurality of user accounts.

After the login, a connection is established between the e-mail managing client and the e-mail server for sending e-mail change notification information (step 404 of FIG. 4A). From FIG. 2, for example, a TCP/IP connection 212 may be established between e-mail managing client 166 and e-mail server 112. The e-mail managing client then requests to receive e-mail change notifications for the plurality of unaffiliated e-mail accounts that have an associated wireless communication device (step 406 of FIG. 4A). The e-mail server processes this request and a second connection is established between the e-mail managing client and the e-mail server for sending e-mail information (step 408 of FIG. 4A). For example, in FIG. 2, e-mail managing client 166 may send an e-mail change notification request to e-mail server 112 and, in response, a TCP/IP connection 214 may be established between e-mail managing client 166 and e-mail server 112 for sending e-mail information.

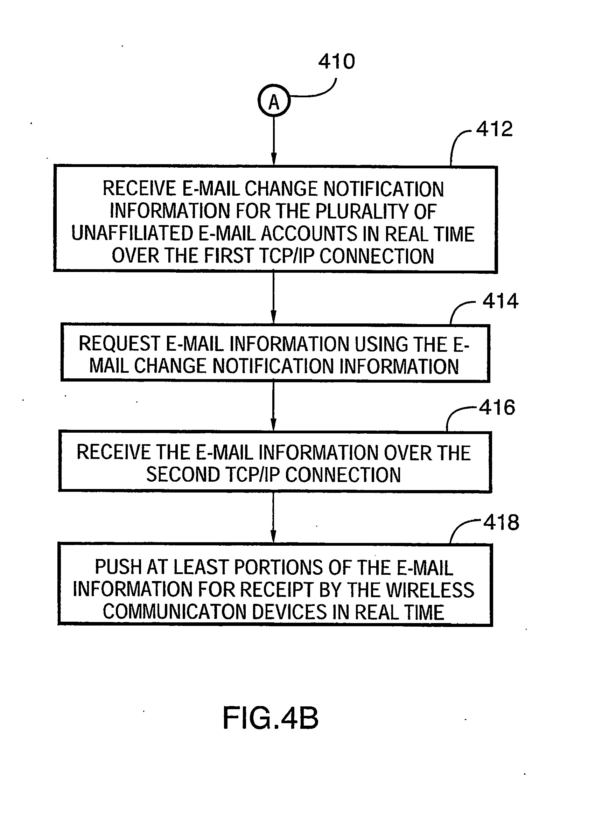

Thus, two TCP/IP connections 212 and 214 may be established between e-mail server 112 and e-mail managing client 166. E-mail server 112 uses TCP/IP connection 212 to continually send e-mail notification information to e-mail managing client 166 in real time, and uses TCP/IP connection 214 to send particular e-mail information to e-mail managing client 166 upon request. Similarly, two TCP/IP connections 216 and 218 may be established between e-mail server 114 and e-mail managing client 166; e-mail server 114 uses TCP/IP connection 216 to continually send e-mail notification information to e-mail managing client 166 in real time, and uses TCP/IP connection 218 to send particular e-mail information to e-mail managing client 166 upon request. The e-mail notification setup is complete, and the flowchart of FIG. 4A continues on to FIG. 4B through a connector 410.

Referring now to FIG. 4B, e-mail change notification information for any e-mail change on any of the e-mail accounts are received in real time by the e-mail managing client from the e-mail server over one of the connections (step 412). For example, in FIG. 2, e-mail change notification information for e-mail changes may be sent by e-mail server 112 and received by e-mail managing client 166 over TCP/IP connection 212. Preferably, each notification message from an e-mail server includes a server identifier that identifies the particular e-mail server (e.g. a server address) and an e-mail change notification identifier for the unique notification/e-mail change (e.g. a sequence number).

To further illustrate step 412 with reference to FIG. 2, computing device 202 may be used to draft and send an e-mail message (hereinafter the "first e-mail message") intended for the end-user of computing device 118 associated with wireless communication device 124 (FIG. 2), and this e-mail message is delivered to the appropriate e-mail account managed by e-mail server 112. An e-mail change notification flag for the newly received message is set within e-mail server 112 for the e-mail account and, soon thereafter, e-mail change notification information for the message is sent to e-mail managing client 166 over TCP/IP connection 212. The notification information includes the server identifier for e-mail server 112 (e.g. "server1.net" and an e-mail change notification identifier or sequence number (e.g. "212").

More detailed information may be included in each notification message as well, such as that outlined in the Table 1 below:

**Table 1. Types of data which may be included in the e-mail change notification information**

| DATA TYPE | EXEMPLARY DATA |
|---|---|
| Sequence Number | 234 |
| Server Name | mds99.blackberry.net |
| Timestamp in time_t Format | 969929449 |
| Folder Name | user.sitename-usemame |
| User ID | Username |
| Message UID | 5 |
| Folder ID | 959529449 |

Continuing with the flowchart of FIG. 4B, the e-mail managing client requests e-mail information from the e-mail server over the second connection using the received e-mail change notification information (step 414 of FIG. 4B). For example, in FIG. 2, e-mail managing client 166 may request from e-mail server 112 that e-mail information associated with the first e-mail message by using the server identifier ("server1.net") as a destination address and using the notification identifier ("212") to identify the e-mail notification and desired e-mail information. E-mail server 112 receives and processes these commands (the appropriate server retrieving the proper e-mail information associated with the notification identifier), and passes the e-mail information to e-mail managing client 166 over the second connection. In response, the e-mail managing client receives this e-mail information over the second TCP/IP connection (step 416 of FIG. 4B). For example, in FIG. 2, e-mail managing client 166 may receive e-mail information over TCP/IP connection 214 associated with the first e-mail message. The obtaining of e-mail information in steps 414 and 416 may be performed by e-mail managing client 166 issuing conventional commands, such as SELECT (e.g. selecting a particular e-mail folder) and FETCH (e.g. fetching particular e-mail data) commands, to e-mail server 112.

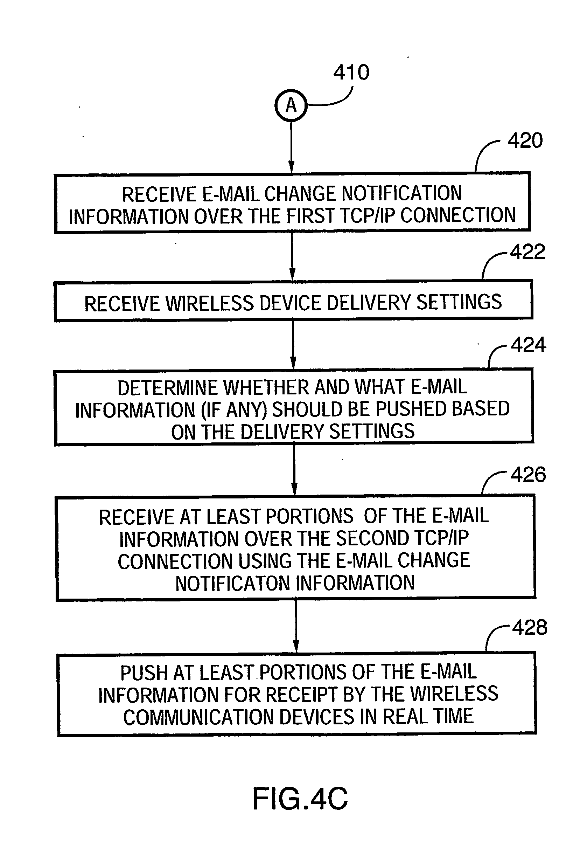

Once this information is received by the e-mail managing client, at least portions of the information are assembled in a message and pushed to the appropriate wireless communication device in real time (step 416 of FIG. 4). For example, in FIG. 2, e-mail information of the first e-mail message is pushed by e-mail managing client 166 to wireless communication device 124. The e-mail information is conveyed through relay 160 to the appropriate wireless network 130 in which the communication device is located. The flowchart ends at step 418, but the method continually repeats beginning again at step 412.

Note that the steps described in relation to FIG. 4B are not only performed in connection with a single e-mail server, but are simultaneously performed in connection with a plurality of different e-mail servers, each of which manage a plurality of unaffiliated e-mail accounts. To illustrate, computing device 202 of FIG. 2 may also be used to draft and send an e-mail message (hereinafter the "second e-mail message") for the end-user of computing device 120 having wireless communication device 126. In addition, computing device 202 may be used to draft and send an e-mail message (hereinafter the "third e-mail message") for the end-user of computing device 204 associated with wireless communication device 208. These second and third e-mail messages are delivered to the appropriate e-mail account managed by e-mail server 112 and e-mail server 114, respectively. Thus, e-mail change notification flags for these newly received messages are set within e-mail servers 112 and 114, respectively, for each e-mail account.

Thus, for step 412 of FIG. 4B, e-mail change notification information associated with the first e-mail message is not only sent to and received by e-mail managing client 166 over TCP/IP connection 212; notification information associated with the second e-mail message is also sent to and received by e-mail managing client 166 over TCP/IP connection 212. The received notification information for this second e-mail message includes the server identifier for e-mail server 112 (e.g. "server1.net" and an e-mail change notification identifier or sequence number (e.g. "245"). In addition, e-mail change notification information associated with the third e-mail message is sent to e-mail managing client 166 over TCP/IP connection 216. The received notification information for the third e-mail message includes the server identifier for e-mail server 114 (e.g. "server2.net") and an e-mail change notification identifier or sequence number (e.g. "099").

Also, for step 414 of FIG. 4B, e-mail managing client 166 not only requests from e-mail server 112 that e-mail information associated with the first e-mail message, but also requests that e-mail information associated with the second e-mail message by using the server identifier ("server1.net") as a destination address and using the notification identifier ("245") to specify the e-mail notification and information. Further, e-mail managing client 166 requests from e-mail server 114 that e-mail information associated with the third e-mail message by using the server identifier ("server2.net") as a destination address and using the notification identifier ("099") to specify the e-mail notification and information. For step 416 of FIG. 4B, e-mail managing client 166 receives e-mail information over TCP/IP connection 214 for not only the first e-mail message, but also for the second e-mail message. Additionally, e-mail managing client 166 receives e-mail information over TCP/IP connection 218 for the third e-mail message. For step 418 of FIG. 4B, not only is e-mail information of the first e-mail message assembled and pushed to wireless communication device 124, but e-mail information of the second e-mail message is pushed to wireless communication device 126 and e-mail information of the third e-mail message is pushed to wireless communication device 208.

Although the above-method was described in relation to the receipt of a new e-mail message, it may be performed for essentially any change to an end-user's mailbox. For example, the e-mail change may be the deletion of an existing message, or the movement of an existing message from one mail folder to a different mail folder. The resulting action will depend on the particular e-mail change that was made; e.g. the resulting action may be an update of existing internal maps as opposed to an e-mail message being pushed.

Preferably, the delivery of e-mail information is also performed based on the wireless communication device delivery settings associated with each e-mail account (e.g. delivery settings described in relation to the e-mail accounts of FIG. 3). This aspect will be described in relation to the portion of the flowchart of FIG. 4C, which continues after the completion of the e-mail notification setup from the flowchart of FIG. 4A. Referring now to FIG. 4C, e-mail change notification information for e-mail changes to any of the e-mail accounts is continually received in real time by the e-mail managing client from the e-mail server over one of the TCP/IP connections (step 420 of FIG. 4C). Each notification message from the e-mail server includes a server identifier which identifies the particular e-mail server (e.g. a server address) and an e-mail change notification identifier for the unique notificationle-mail change (e.g. a sequence number).

Next, the e-mail managing client requests and receives the wireless delivery settings associated with the e-mail account from the e-mail server over the second connection (step 422 of FIG. 4C). In particular, the obtaining of delivery settings in step 422 may be performed by issuing conventional commands, such as SELECT (e.g. selecting a particular e-mail folder) and FETCH (e.g. fetching the delivery settings data) commands, to the e-mail server. For example, the delivery setting may be one of those described in relation to the e-mail accounts in FIG. 3.

A delivery setting is indicative of whether or not the e-mail information should be delivered to the wireless communication device and, if e-mail information is to be delivered, which portions of the e-mail information should be delivered. The e-mail information may include, but is not limited to, e-mail header information (data within TO, CC, FROM, and SUBJECT fields), e-mail delivery date and time, e-mail message text, and file attachments. Other suitable delivery settings may be specified, such as a Level 1 Priority setting which delivers e-mail information to the wireless communication device only when the e-mail message delivered is specified as Level 1 Priority. In the examples shown in FIG. 3, e-mail account 304 for "Barry Gilhuly" has a delivery setting of "ALWAYS SEND ONLY E-MAIL HEADER INFORMATION", e-mail account 306 for "Andy Van" has a delivery setting of "NEVER SEND E-MAIL", and e-mail account 308 for "Thomas Parry" has a delivery setting of "ALWAYS SEND FULL E-MAIL TEXT". Preferably, the delivery settings may be changed by the end-user of a computing device (and/or wireless communication device) through an appropriate command or instruction, for example, when the computing device (and/or wireless communication device) is appropriately logged on to the e-mail server. Thus, the delivery settings are user configurable through the computing device and/or the wireless communication device.

Referring back to FIG. 4C, the e-mail managing client determines whether and/or what e-mail information is to be pushed to a wireless communication device based on the retrieved delivery settings (step 424 of FIG. 4C). If the e-mail managing client determines that no e-mail information is to be pushed for this notification (e.g. setting which indicates NEVER SEND E-MAIL), then no request for e-mail information is made. On the other hand, the e-mail managing client may determine that e-mail information is to be pushed for this notification (e.g. setting which indicates SEND E-MAIL). In this case, the e-mail managing client requests and receives e-mail information from the appropriate e-mail server using the e-mail change notification information that is has received (step 426 of FIG. 4C).

More particularly in step 426, the e-mail managing client requests from the appropriate e-mail server that e-mail information associated with the e-mail message with use of the server identifier as a destination address and the notification identifier to specify the appropriate e-mail notification and information. The e-mail server receives and processes this message, retrieving the proper e-mail information associated with the notification identifier from the appropriate server, and thereafter sends the e-mail information to the e-mail managing client over the second TCP/IP connection. In response, the e-mail managing client receives this e-mail information over the second TCP/IP connection. In particular, the obtaining of this e-mail information may be performed by issuing conventional commands, such as SELECT (e.g. selecting a particular e-mail folder) and FETCH (e.g. fetching particular e-mail data) commands, to the e-mail server. The e-mail managing client then assembles the appropriate information into a message and pushes the message to the wireless device (step 428 of FIG. 4C). The information is pushed through relay 160 and the appropriate wireless network 130 in which the communication device is located.

Elaborating on the example described earlier in relation to FIG. 4B, e-mail managing client 166 of FIG. 2 receives the first notification message for the first e-mail message which includes the server address for e-mail server 112 ("server1.net") and a sequence number of "212" which uniquely identifies the e-mail notification, which are associated e-mail account 304 of FIG. 3. Also retrieved is a delivery setting of "ALWAYS SEND ONLY E-MAIL HEADER INFORMATION" associated with computing device 118 through e-mail account 304. In this case, e-mail managing client 166 sends a command to receive e-mail information using "server1.net" as a destination address and "212" as a notification identifier. Preferably, e-mail server 112 is configured to send all or most relevant e-mail information to e-mail managing client 166, so that e-mail managing client 166 may extract and push only a portion (e.g. the e-mail header) of the information to the wireless communication device. In an alternate embodiment, e-mail server 112 may be configured to send only that part of e-mail information as specified in the delivery setting, so that e-mail managing client 166 merely has to appropriately configure the information into a message and push it to the wireless device.

Continuing with the example, e-mail managing client 166 also receives the second notification message for the second e-mail message which includes the server address for e-mail server 112 ("server1.net") and a sequence number of "245" which uniquely identifies the particular e-mail notification for e-mail account 306 of FIG. 3. Also retrieved is a delivery setting of "NEVER SEND E-MAIL" associated with computing device 118 for e-mail account 306 of FIG. 3. When e-mail managing client 166 receives this particular delivery setting, it does not issue any command to receive e-mail information for notification identifier "245" and does not push any information associated with this notification.

Finally, e-mail managing client 166 receives the third notification message for the third e-mail message which includes the server address for e-mail server 112 ("server2.net") and a sequence number of "099" which uniquely identifies this particular e-mail notification for e-mail account 306 of FIG. 3. Also retrieved is a delivery setting of "ALWAYS SEND FULL E-MAIL TEXT" associated with computing device 118 for e-mail account 306. In this case, e-mail server 112 sends the e-mail information to e-mail managing client 166 which configures the information into a message which is pushed to the wireless communication device.

If a delivery setting of "SEND ONLY LEVEL-1 PRIORITY E-MAIL" (see FIG. 3) is used for the e-mail account and received by e-mail managing client 166, e-mail managing client 166 issues a command to receive e-mail information corresponding to the notification identifier, receives the e-mail information, and tests whether or not the e-mail message information indicates a level-1 priority. If the e-mail message information indicates a level-1 priority, then e-mail managing client 166 pushes the appropriate e-mail information to the wireless communication device. If the e-mail message information indicates something less than a level-1 priority, then e-mail managing client 166 does not push any e-mail information to the wireless communication device.

Thus, a method of pushing e-mail information from an e-mail server to a plurality of wireless communication devices has been described. In one exemplary method, the e-mail server is publicly accessible and manages a plurality of unaffiliated e-mail accounts respectively associated with the plurality of wireless communication devices. The method is performed by an e-mail managing client and comprises the acts of establishing and maintaining a connection with the e-mail server; receiving, over the connection, e-mail change notifications for the plurality of unaffiliated e-mail accounts; receiving e-mail information associated with the e-mail change notifications; and pushing at least portions of the e-mail information for receipt by the plurality of wireless communication devices. Preferably, the method makes use of the Internet Message Access Protocol (IMAP) standard and the connection is a single TCP/IP connection. The method may also advantageously include the additional acts of receiving user-configurable delivery settings associated with the e-mail notifications; and determining whether and/or what e-mail information should be pushed based on the user-configurable delivery settings.

Another exemplary method involves pushing e-mail information from a plurality of e-mail servers to a plurality of wireless communication devices. This method is performed by an e-mail managing client and comprises the acts of, for each e-mail server: logging on to an e-mail server on behalf of a plurality of unaffiliated e-mail accounts and establishing and maintaining a connection therewith; receiving, over the connection, e-mail change notifications for the plurality of unaffiliated e-mail accounts, each e-mail change notification comprising an e-mail server identifier and an e-mail notification identifier; receiving e-mail information associated with the e-mail change notifications; and pushing at least portions of the e-mail information for receipt by the plurality of wireless communication devices substantially in real time. Preferably, this method makes use of the IMAP standard and the connection is a single TCP/IP connection. The method may also advantageously include the additional acts of receiving user-configurable delivery settings associated with the e-mail notifications; and determining whether and/or what e-mail information should be pushed based on the user-configurable delivery settings.

It is to be understood that the above is merely a description of preferred embodiments of the invention and that various changes, alterations, and variations may be made. For example, the method may be used for essentially any change to an end-user's mailbox; the e-mail change may be the deletion of an existing message or the movement of an existing message from one mail folder to a different mail folder. None of the terms or phrases in the specification and claims has been given any special particular meaning different from the plain language meaning to those skilled in the art, and therefore the specification is not to be used to define terms in an unduly narrow sense.

## Claims

1. A method of pushing e-mail information from an e-mail server (112) to a plurality of wireless communication devices (104), the e-mail server (112) managing a plurality of unaffiliated e-mail accounts respectively associated with the plurality of wireless communication devices (104), the method being performed by an e-mail managing client (166) and comprising the acts of:
establishing and maintaining a connection (212) with the e-mail server (112);
receiving, over the connection (212), e-mail change notifications for the plurality of unaffiliated e-mail accounts;
receiving e-mail information associated with the e-mail change notifications; and
pushing at least portions of the e-mail information for receipt by a respective wireless communication device (104).

2. The method of claim 1, wherein the e-mail server (112) comprises an Internet Message Access Protocol (IMAP) server.

3. The method of claim 1, wherein the act of establishing and maintaining the connection (212) comprises establishing and maintaining a TCP/IP connection.

4. The method of claim 1, further comprising the act of:
logging on to the e-mail server (112) on behalf of the plurality of unaffiliated e-mail accounts for establishing the connection (212).

5. The method of claim 1, wherein the act of establishing and maintaining the connection (212) comprises establishing and maintaining a first connection (212), the method comprising the further acts of:
establishing and maintaining a second connection (214) for receiving the e-mail information.

6. The method of claim 1, further comprising the acts of:
for each of a plurality of e-mail change notifications received:
receiving an e-mail server identifier and an e-mail notification identifier; and
sending, to a particular e-mail server (112), a request to receive email information corresponding to the particular e-mail change notification using the e-mail server identifier and the e-mail notification identifier.

7. The method of claim 1, further comprising:
for each of a plurality of e-mail change notifications received:
receiving an e-mail notification identifier;
receiving a user-configurable delivery setting; and
pushing at least a portion of the e-mail information for receipt by a particular wireless communication device (104) based on the user-configurable delivery setting.

8. The method of claim 1, wherein the e-mail server (112) comprises a first e-mail server (112) associated with a first plurality of unaffiliated e-mail accounts having first e-mail change notifications sent over a first connection (212) and first e-mail information associated therewith, the method comprising the further acts of:
providing a second e-mail server (114) which is publicly accessible and manages a second plurality of unaffiliated e-mail accounts respectively associated with a second plurality of wireless communication devices;
establishing and maintaining a second connection (216) with the second e-mail server (114);
receiving second e-mail change notifications for the second plurality of unaffiliated e-mail accounts over the second connection (216);
receiving second e-mail information associated with the second e-mail change notifications; and
pushing at least portions of the second e-mail information to the second plurality of wireless communication devices.

9. A computer program product for pushing e-mail information from an e-mail server (112) to a plurality of wireless communication devices (104), the e-mail server (112) managing a plurality of unaffiliated e-mail accounts respectively associated with the plurality of wireless communication devices (104), the computer program product comprising:
a storage medium;
computer instructions stored on the storage medium;
the computer instructions being executable by a processor for:
establishing and maintaining a connection (212) with an e-mail server (112);
receiving e-mail change notifications for the plurality of unaffiliated e-mail accounts over the connection (212);
receiving e-mail information associated with the e-mail change notifications; and
pushing at least portions of the e-mail information for receipt by a respective wireless communication device (104).

10. The computer program product of claim 9, wherein the computer instructions are further executable for establishing and maintaining a connection (212) comprising a TCP/IP connection.

11. The computer program product of claim 9, wherein the computer instructions are further executable for logging in to the publicly accessible e-mail server (112) on behalf of the plurality of unaffiliated e-mail accounts for establishing the connection (212).

12. The computer program product of claim 9, wherein the connection (212) comprises a first connection (212), and wherein the computer instructions are further executable for establishing and maintaining a second connection (214) for receiving the e-mail information.

13. The computer program product of claim 9, wherein the computer instructions are further executable for receiving an e-mail server identifier and an e-mail notification identifier corresponding to an e-mail change notification, and for sending to a particular e-mail server (112) a request to receive email information corresponding to the e-mail change notification using the e-mail server identifier and the e-mail notification identifier.

14. The computer program product of claim 9, wherein the computer instructions are further executable for receiving an e-mail notification identifier and a user-configurable delivery setting corresponding to an e-mail change notification, and for pushing at least a portion of the e-mail information for receipt by a particular wireless communication device (104) based on the user-configurable delivery setting.

15. A system for pushing e-mail information to a plurality of wireless communication devices (104), comprising:
an e-mail server (112);
the e-mail server (112) being configured to manage a plurality of unaffiliated e-mail accounts which are respectively associated with the plurality of wireless communication devices (104);
an e-mail managing client (166);
the e-mail managing client (116) and the e-mail server (112) being configured to establish and maintain a connection (212) therebetween;
the e-mail server (112) being configured to send e-mail change notifications over the connection (212) for the plurality of unaffiliated e-mail accounts and the e-mail managing client (166) being configured to receive the same;
the e-mail server (112) being configured to send e-mail information associated with the e-mail change notifications and the e-mail managing client (166) being configured to receive the same; and
the e-mail managing client (166) being configured to push at least portions of the e-mail information for receipt by a respective wireless communication device (104).

16. The system of claim 15, wherein the e-mail server (112) comprises a first publicly accessible e-mail server (112), the system further comprising:
a second publicly accessible e-mail server (114);
the second e-mail server (114) being configured to manage a plurality of unaffiliated e-mail accounts which are respectively associated with the plurality of wireless communication devices (104);
the e-mail managing client (166) and the second e-mail server (114) being configured to establish and maintain a connection (212) therebetween;
the second e-mail server (114) being configured to send e-mail change notifications over the connection (212) for the plurality of unaffiliated e-mail accounts and the e-mail managing client (166) being configured to receive the same;
the second e-mail server (114) being configured to send e-mail information associated with the e-mail change notifications and the e-mail managing client (166) being configured to receive the same; and
the e-mail managing client (166) being configured to push at least portions of the e-mail information for receipt by the plurality of wireless communication devices (104).

17. The system of claim 15, wherein the e-mail server (112) comprises an Internet Message Access Protocol (IMAP) server.

18. The system of claim 15, wherein the e-mail managing client (166) and the e-mail server (112) are further configured to establish and maintain a connection (212) comprising a TCP/IP connection (212).

19. The system of claim 15, wherein the e-mail managing client (166) is further configured to log on to the e-mail server (112) on behalf of the plurality of unaffiliated e-mail accounts for establishing the connection (212).

20. The system of claim 15, wherein the connection (212) comprises a first connection (212), and wherein the e-mail server (112) and the e-mail managing client (166) are further configured to establish and maintain a second connection (214) for sending and receiving the e-mail information.

21. The system of claim 15, further comprising:
the e-mail managing client (166) being further configured to receive an e-mail server identifier and an e-mail notification identifier for each received e-mail change notification;
the e-mail managing client (166) being further configured to send, to a particular e-mail server, a command to receive email information corresponding to the particular e-mail change notification using the e-mail server identifier and the e-mail notification identifier.

22. The system of claim 15, further comprising:
wherein the e-mail server (112) is further configured to send an e-mail notification identifier for each e-mail change notification;
wherein the e-mail managing client (166) is configured to retrieve a user-configurable delivery setting; and
wherein the e-mail managing client (166) is further configured to push at least a portion of the e-mail information for receipt by a particular wireless communication device (104) based on the user-configurable delivery setting.

23. The system of claim 15, further comprising:
a plurality of e-mail servers (102);
each e-mail server (102) being configured to manage a plurality of unaffiliated e-mail accounts which are respectively associated with the plurality of wireless communication devices (104);
the e-mail managing client (166) being configured to log on to each e-mail server (102) on behalf of the plurality of unaffiliated e-mail accounts and establish and maintain a connection (212) therewith;
each e-mail server (102) being configured to send e-mail change notification information for the plurality of unaffiliated e-mail accounts over the connection (212) and the e-mail managing client (166) being configured to receive the same, wherein the e-mail change notification information comprises an e-mail server identifier and an e-mail notification identifier;
each e-mail server (102) being configured to send e-mail information associated with the e-mail change notification information and the e-mail managing client (166) being configured to receive the same; and
the e-mail managing client (166) being configured to push at least portions of the e-mail information for receipt by the plurality of wireless communication devices (104) substantially in real time.

24. The system of claim 23, further comprising:
wherein the e-mail managing client (166) being further configured to receive a user-configurable delivery setting; and
the e-mail managing client (166) being further configured to determine whether and/or what e-mail information should be pushed based on the user-configurable delivery settings.

25. The system of claim 23, further comprising:
wherein the e-mail managing client (166) being further configured to receive a user-configurable delivery setting;
the e-mail managing client (166) being further configured to determine whether and/or what e-mail information should be pushed based on the user-configurable delivery settings; and
the e-mail managing client (166) being further configured to request e-mail information from each e-mail server (102) if it determines that the e-mail information should be pushed based on the user-configurable delivery settings.

26. The system of any of claims 15 to 25 wherein the email server (112) is publicly accessible.

27. An e-mail managing client (166) for pushing e-mail information from an e-mail server (112) to a plurality of wireless communication devices (104), the e-mail server (112) managing a plurality of unaffiliated e-mail accounts respectively associated with the plurality of wireless communication devices (104), the e-mail managing client (166) being arranged to:
establish and maintain a connection (212) with the e-mail server (112);
receive, over the connection (212), e-mail change notifications for the plurality of unaffiliated e-mail accounts;
receive e-mail information associated with the e-mail change notifications; and
push at least portions of the e-mail information for receipt by a respective wireless communication device (104).

## Patentansprüche

1. Verfahren zum Push-Übermitteln von Email-Informationen von einem Email-Server (112) zu einer Vielzahl kabelloser Kommunikationsgeräte (104), wobei der Email-Server (112) eine Vielzahl nicht zusammengeschlossener Email-Konten handhabt, die der Vielzahl kabelloser Kommunikationsgeräte (104) entsprechend zugeordnet sind, wobei das Verfahren von einem Email-Handhabungs-Client (166) ausgeführt wird und folgende Vorgänge aufweist:
Aufbauen und Aufrechterhalten einer Verbindung (212) mit dem Email-Server (112);
Empfangen über die Verbindung (212) von Email-Änderungsbenachrichtigungen für die Vielzahl von nicht zusammengeschlossenen Email-Konten;
Empfangen von Email-Information, die den Email-Änderungsbenachrichtigungen zugeordnet ist; und
Push-Übermitteln von zumindest Teilen der Email-Information für den Empfang durch ein entsprechendes kabelloses Kommunikationsgerät (104).

2. Verfahren nach Anspruch 1, wobei der Email-Server (112) einen Intemet-Message-Access-Protocoll (IMAP)-Server aufweist.

3. Verfahren nach Anspruch 1, wobei der Vorgang des Aufbauens und Aufrechterhaltens der Verbindung (212) das Aufbauen und Aufrechterhalten einer TCP/IP-Verbindung aufweist.

4. Verfahren nach Anspruch 1, welches weiters folgenden Vorgang aufweist:
Einloggen auf dem Email-Server (112) im Namen der Vielzahl nicht zusammengeschlossener Email-Konten zum Aufbauen der Verbindung (212).

5. Verfahren nach Anspruch 1, wobei der Vorgang des Aufbauens und Aufrechterhaltens der Verbindung (212) das Aufbauen und Aufrechterhalten einer ersten Verbindung (212) aufweist, wobei das Verfahren weiters folgende Vorgänge aufweist:
Aufbauen und Aufrechterhalten einer zweiten Verbindung (214) zum Empfangen der Email-Information.

6. Verfahren nach Anspruch 1, welches weiters folgende Vorgänge aufweist:
für jede der Vielzahl von empfangenen Email-Änderungsbenachrichtigungen:
Empfangen einer Email-Serverkennung und einer Email-Benachrichtigungskennung; und
Senden an einen bestimmten Email-Server (112) einer Anfrage zum Empfang der Email-Information, die der bestimmten Email-Änderungsbenachrichtigung entspricht unter Verwendung der Email-Serverkennung und der Email-Benachrichtigungskennung.

7. Verfahren nach Anspruch 1, welches weiters aufweist:
Für jede der Vielzahl an empfangenen Email-Änderungsbenachrichtigungen:
Empfangen einer Email-Benachrichtigungskennung;
Empfangen von benutzerkonfigurierbaren Ausgabe-Einstellungen; und
Push-Übermitteln von zumindest einem Teil der Email-Information für den Empfang durch ein bestimmtes kabelloses Kommunikationsgerät (104) basierend auf der benutzerkonfigurierbaren Ausgabe-Einstellung.

8. Verfahren nach Anspruch 1, wobei der Email-Server (112) einen ersten Email-Server (112) aufweist, welcher einer ersten Vielzahl von nicht zusammengeschlossenen Email-Konten zugeordnet ist, welche über eine erste Verbindung (212) gesendete erste Email-Änderungsbenachrichtigungen, und damit verbundene erste Email-Information aufweist, wobei das Verfahren folgende weitere Vorgänge aufweist:
Bereitstellen eines zweiten Email-Servers (114), der öffentlich zugänglich ist und eine zweite Vielzahl an nicht zusammengeschlossenen Email-Konten handhabt, die einer zweiten Vielzahl von kabellosen Kommunikationsgeräten entsprechend zugeordnet sind;
Aufbauen und Aufrechterhalten einer zweiten Verbindung (216) mit dem zweiten Email-Server (114);
Empfangen von zweiten Email-Änderungsbenachrichtigungen für die zweite Vielzahl nicht zusammengeschlossener Email-Konten über die zweite Verbindung (216);
Empfangen von zweiten Email-Informationen, die den zweiten Email-Änderungsbenachrichtigungen zugeordnet sind; und
Push-Übermitteln von zumindest Teilen der zweiten Email-Information an die zweite Vielzahl an kabellosen Kommunikationsgeräten.

9. Computerprogrammprodukt zum Push-Übermitteln von Email-Information von einem Email-Server (112) an eine Vielzahl kabelloser Kommunikationsgeräte (104), wobei der Email-Server (112) eine Vielzahl nicht zusammengeschlossener Email-Konten handhabt, die der Vielzahl kabelloser Kommunikationsgeräte (104) entsprechend zugeordnet sind, wobei das Computerprogrammprodukt aufweist:
ein Speichermedium;
Computeranweisungen, die auf dem Speichermedium gespeichert sind;
die Computeranweisungen von einem Prozessor ausführbar sind zum:
Aufbauen und Aufrechterhalten einer Verbindung (212) mit dem Email-Server (112);
Empfangen von Email-Änderungsbenachrichtigungen für die Vielzahl von nicht zusammengeschlossenen Email-Konten über die Verbindung (212);
Empfangen von Email-Information, die den Email-Änderungsbenachrichtigungen zugeordnet ist; und
Push-Übermitteln von zumindest Teilen der Email-Information für den Empfang durch ein entsprechendes kabelloses Kommunikationsgerät (104).

10. Computerprogrammprodukt nach Anspruch 9, wobei die Computeranweisungen weiters ausführbar sind, um eine Verbindung (212), die eine TCP/IP-Verbindung aufweist, aufzubauen und aufrecht zu erhalten.

11. Computerprogrammprodukt nach Anspruch 9, wobei die Computeranweisungen weiters ausführbar sind, um sich auf einem öffentlich zugänglichen Email-Server (112) im Namen der Vielzahl nicht zusammengeschlossener Email-Konten zum Aufbauen der Verbindung (212) einzuloggen.

12. Computerprogrammprodukt nach Anspruch 9, wobei die Verbindung (212) eine Erste Verbindung (212) aufweist und wobei die Computeranweisungen weiters ausführbar sind, um eine zweite Verbindung (214) für das Empfangen der Email-Information aufzubauen und aufrecht zu erhalten.

13. Computerprogrammprodukt nach Anspruch 9, wobei die Computeranweisungen weiters ausführbar sind, um eine Email-Serverkennung und eine Email-Benachrichtigungskennung, die einer Email-Änderungsbenachrichtigung entspricht, zu empfangen, und um zu einem bestimmten Email-Server (112) eine Anfrage zu senden, um Email-Informationen zu erhalten, die der Email-Änderungsbenachrichtigung entsprechen unter Verwendung der Email-Serverkennung und der Email-Benachrichtigungskennung.

14. Computerprogrammprodukt nach Anspruch 9, wobei die Computeranweisungen weiters ausführbar sind, um eine Email-Benachrichtigungskennung und benutzerkonfigurierbare Ausgabe-Einstellungen entsprechend einer Email-Änderungsbenachrichtigung zu empfangen, und um zumindest einen Teil der Email-Informationen für den Empfang durch ein bestimmtes kabelloses Kommunikationsgerät (104) basierend auf den benutzerkonfigurierbaren Ausgabe-Einstellungen zu übermitteln.

15. System zum Push-Übermitteln von Email-Information an eine Vielzahl kabelloser Komunikationsgeräte (104), welches aufweist:
einen Email-Server (112);
der Email-Server (112) ist konfiguriert, um eine Vielzahl von nicht zusammengeschlossenen Email-Konten zu handhaben, die der Vielzahl kabelloser Kommunikationsgeräte (104) entsprechend zugeordnet sind;
einen Email-Handhabungs-Client (166);
der Email-Handhabungs-Client (116) und der Email-Server (112) sind konfiguriert, um eine Verbindung (212) dort dazwischen aufzubauen und aufrecht zu erhalten;
der Email-Server (112) ist konfiguriert, um Email-Änderungsbenachrichtigungen über die Verbindung (212) für die Vielzahl nicht zusammengeschlossener Email-Konten zu senden und der Email-Handhabungs-Client (166) ist konfiguriert, dieselben zu empfangen;
der Email-Server (112) ist konfiguriert, um den Email-Änderungsbenachrichtigungen zugeordnete Email-Information zu senden, und der Email-Handhabungs-Client (166) ist konfiguriert, um dieselben zu empfangen; und
der Email-Handhabung-Client (166) ist konfiguriert, zumindest Teile der Email-Information für den Empfang durch ein entsprechendes kabelloses Kommunikationsgerät (104) zu übermitteln.

16. System nach Anspruch 15, wobei der Email-Server (112) einen ersten öffentlich zugänglichen Email-Server (112) aufweist, wobei das System weiters aufweist:
einen zweiten öffentlich zugänglichen Email-Server (114);
der zweite Email-Server (114) ist konfiguriert, um eine Vielzahl von nicht zusammengeschlossenen Email-Konten zu handhaben, die der Vielzahl kabelloser Kommunikationsgeräte (104) entsprechend zugeordnet sind;
der Email-Handhabungs-Client (166) und der zweite Email-Server (114) sind konfiguriert, um eine Verbindung (212) dort dazwischen aufzubauen und aufrecht zu erhalten;
der zweite Email-Server (114) ist konfiguriert, um Email-Änderungsbenachrichtigungen über die Verbindung (212) für die Vielzahl nicht zusammengeschlossener Email-Konten zu senden und der Email-Handhabungs-Client (166) ist konfiguriert, dieselben zu empfangen;
der zweite Email-Server (114) ist konfiguriert, um den Email-Änderungsbenachrichtigungen zugeordnete Email-Information zu senden, und der Email-Handhabungs-Client (166) ist konfiguriert, um dieselben zu empfangen; und
der Email-Handhabung-Client (166) ist konfiguriert, zumindest Teile der Email-Information für den Empfang durch die Vielzahl an kabellosen Kommunikationsgeräten (104) zu übermitteln.

17. System nach Anspruch 15, wobei der Email-Server (112) einen Internet-Message-Access-Protocoll (IMAP)-Server aufweist.

18. System nach Anspruch 15, wobei der Email-Handhabungs-Client (166) und der Email-Server (112) weiters konfiguriert sind, um eine Verbindung (212), die eine TCP/IP-Verbindung (212) aufweist, aufzubauen und aufrecht zu erhalten.

19. System nach Anspruch 15, wobei der Email-Handhabungs-Client (166) weiters konfiguriert ist, um sich auf dem Email-Server (112) im Namen der Vielzahl nicht zusammengeschlossener Email-Konten zum Aufbauen der Verbindung (212) einzuloggen.

20. System nach Anspruch 15, wobei die Verbindung (212) eine erste Verbindung (212) aufweist und wobei der Email-Server (112) und der Email-Handhabungs-Client (166) weiters konfiguriert sind, um eine zweite Verbindung (214) für das Senden und Empfangen der Email-Information aufzubauen und aufrecht zu erhalten.

21. System nach Anspruch 15, welches weiters aufweist:
der Email-Handhabungs-Client (166) ist weiters konfiguriert, um eine Email-Server-Kennung und eine Email-Benachrichtigungs-Kennung für jede empfangene Email-Änderungsbenachrichtigung zu empfangen;
der Email-Handhabungs-Client (166) ist weiters konfiguriert, um unter Verwendung der Email-Server-Kennung und der Email-Benachrichtigungs-Kennung an einen bestimmten Email-Server einen Befehl zu senden, der bestimmten Email-Änderungsbenachrichtigung entsprechende Email-Information zu empfangen.

22. System nach Anspruch 15, welches weiters aufweist:
wobei der Email-Server (112) weiters konfiguriert ist, eine Email-Benachrichtigungs-Kennung für jede Email-Änderungsbenachrichtigung zu senden;
wobei der Email-Handhabungs-Client (166) konfiguriert ist, eine benutzerkonfigurierbare Ausgabe-Einstellung zu empfangen; und
wobei der Email-Handhabungs-Client (166) weiters konfiguriert ist, um zumindest einen Teil der Email-Information für den Empfang durch ein bestimmtes kabelloses Kommunikationsgerät (104) basierend auf der benutzerkonfigurierbaren Ausgabe-Einstellung zu übermitteln.

23. System nach Anspruch 15, welches weiters aufweist:
eine Vielzahl von Email-Servern (102);
jeder Email-Server (102) ist konfiguriert, um eine Vielzahl von nicht zusammengeschlossenen Email-Konten, die der Vielzahl von kabellosen Kommunikationsgeräten (104) entsprechend zugeordnet sind, zu handhaben;
der Email-Handhabungs-Client (166) ist konfiguriert, sich auf jeden Email-Server (102) im Namen der Vielzahl nicht zusammengeschlossener Email-Konten einzuloggen und eine Verbindung (212) damit aufzubauen und aufrecht zu erhalten;
jeder Email-Server (102) ist konfiguriert, Email-Änderungsbenachrichtigungs-Information für die Vielzahl von nicht zusammengeschlossenen Email-Konten über die Verbindung (212) zu senden, und der Email-Handhabungs-Client (166) ist konfiguriert, dieselben zu empfangen, wobei die Email-Änderungsbenachrichtigungs-Information eine Email-Server-Kennung und eine Email-Benachrichtigungs-Kennung beinhaltet;
jeder Email-Server (102) ist konfiguriert, der Email-Änderungsbenachrichtigungs-Information zugeordnete Email-Information zu senden, und der Email-Handhabungs-Client (166) ist konfiguriert, dieselbe zu empfangen; und
der Email-Handhabungs-Client (166) ist konfiguriert, zumindest Teile der Email-Information für den Empfang durch die Vielzahl von kabellosen Kommunikationsgeräten (104) vorzugsweise in Echtzeit zu übermitteln.

24. System nach Anspruch 23, welches weiters aufweist:
wobei der Email-Handhabungs-Client (166) weiters konfiguriert ist, eine benutzerkonfigurierbare Ausgabe-Einstellung zu empfangen; und
der Email-Handhäbungs-Client (166) ist weiters konfiguriert, auf Basis der benutzerkonfigurierbaren Ausgabe-Einstellungen zu ermitteln ob und/oder welche Email-Information zugeleitet werden soll.

25. System nach Anspruch 23, welches weiters aufweist:
wobei der Email-Handhabungs-Client (166) weiters konfiguriert ist, eine benutzerkonfigurierbare Ausgabe-Einstellung zu empfangen;
der Email-Handhabungs-Client (166) ist weiters konfiguriert, auf Basis der benutzerkonfigurierbaren Ausgabe-Einstellungen zu ermitteln ob und/oder welche Email-Information zugeleitet werden soll; und
der Email-Handhabungs-Client (166) ist weiters konfiguriert, Email-Information von jedem Email-Server (102) anzufordern, wenn er ermittelt, dass die Email-Information basierend auf den benutzerkonfigurierbaren Ausgabe-Einstellungen zugeleitet werden soll.

26. System nach einem der Ansprüche 15 bis 25 wobei der Email-Server (112) öffentlich zugänglich ist.

27. Email-Handhabungs-Client (166) zum Push-Übermitteln von Email-Information von einem Email-Server (112) zu einer Vielzahl von kabellosen Kommunikationsgeräten (104), wobei der Email-Server (112) eine Vielzahl nicht zusammengeschlossener Email-Konten handhabt, die der Vielzahl kabelloser Kommunikationsgeräte (104) entsprechend zugeordnet sind, wobei der Email-Handhabungs-Client (166) eingerichtet ist, um:
eine Verbindung (212) mit dem Email-Server (112) aufzubauen und aufrecht zu erhalten;
Email-Änderungsbenachrichtigungen für die Vielzahl von nicht zusammengeschlossenen Email-Konten über die Verbindung (212) zu empfangen;
den Email-Änderungsbenachrichtigungen zugeordnete Email-Information zu empfangen; und
zumindest einen Teil der Email-Information für den Empfang durch ein entsprechendes kabelloses Kommunikationsgerät (104) zu übermitteln.

## Revendications

1. Procédé permettant de pousser des informations de courrier électronique d'un serveur de courrier électronique (112) vers une pluralité de dispositifs de communication sans fil (104), le serveur de courrier électronique (112) gérant une pluralité de comptes de courrier électronique non affiliés respectivement associés à la pluralité de dispositifs de communication sans fil (104), le procédé étant exécuté par un client de gestion de courrier électronique (166) et comprenant les actions suivantes :
l'établissement et le maintien d'une connexion (212) avec le serveur de courrier électronique (112);
la réception, par la connexion (212), de notifications de changement de courrier électronique pour la pluralité de comptes de courrier électronique non affiliés;
la réception d'informations de courrier électronique associées aux notifications de changement de courrier électronique, et
la poussée d'au moins des parties des informations de courrier électronique pour leur réception par un dispositif de communication sans fil (104) respectif.

2. Procédé suivant la revendication 1, dans lequel le serveur de courrier électronique (112) comprend un serveur IMAP (Internet Message Access Protocol/protocole d'accès aux messages Internet).

3. Procédé suivant la revendication 1, dans lequel l'action d'établissement et de maintien de la connexion (212) comprend l'établissement et le maintien d'une connexion TCP/IP.

4. Procédé suivant la revendication 1, comprenant en outre l'action suivante :
l'ouverture d'une session sur le serveur de courrier électronique (112) au nom de la pluralité de comptes de courrier électronique non affiliés pour établir la connexion (212).

5. Procédé suivant la revendication 1, dans lequel l'action d'établissement et de maintien de la connexion (212) comprend l'établissement et le maintien d'une première connexion (212), le procédé comprenant les actions supplémentaires suivantes :
l'établissement et le maintien d'une deuxième connexion (214) pour recevoir les informations de courrier électronique.

6. Procédé suivant la revendication 1, comprenant en outre les actions suivantes :
pour chacune d'une pluralité de notifications de changement de courrier électronique reçues :
la réception d'un identificateur de serveur de courrier électronique et d'un identificateur de notification de courrier électronique, et
l'envoi, à un serveur de courrier électronique (112) particulier, d'une demande de réception d'informations de courrier électronique correspondant à la notification de changement de courrier électronique particulière en utilisant l'identificateur de serveur de courrier électronique et l'identificateur de notification de courrier électronique.

7. Procédé suivant la revendication 1, comprenant en outre :
pour chacune d'une pluralité de notifications de changement de courrier électronique reçues :
la réception d'un identificateur de notification de courrier électronique;
la réception d'un paramètre de remise configurable par l'utilisateur, et
la poussée d'une partie au moins des informations de courrier électronique pour leur réception par un dispositif de communication sans fil (104) particulier sur la base du paramètre de remise configurable par l'utilisateur.

8. Procédé suivant la revendication 1, dans lequel le serveur de courrier électronique (112) comprend un premier serveur de courrier électronique (112) associé à une première pluralité de comptes de courrier électronique non affiliés, des premières notifications de changement de courrier électronique étant envoyées sur une première connexion (212) et des premières informations de courrier électronique étant associées à celles-ci, le procédé comprenant les actions supplémentaires suivantes :
la mise à disposition d'un deuxième serveur de courrier électronique (114) qui est accessible au public et gère une deuxième pluralité de comptes de courrier électronique non affiliés respectivement associés à une deuxième pluralité de dispositifs de communication sans fil;
l'établissement et le maintien d'une deuxième connexion (216) avec le deuxième serveur de courrier électronique (114);
la réception de deuxièmes notifications de changement de courrier électronique pour la deuxième pluralité de comptes de courrier électronique non affiliés par la deuxième connexion (216);
la réception de deuxièmes informations de courrier électronique associées aux deuxièmes notifications de changement de courrier électronique, et
la poussée d'au moins des parties des deuxièmes informations de courrier électronique vers la deuxième pluralité de dispositifs de communication sans fil.

9. Produit formant programme informatique permettant de pousser des informations de courrier électronique d'un serveur de courrier électronique (112) vers une pluralité de dispositifs de communication sans fil (104), le serveur de courrier électronique (112) gérant une pluralité de comptes de courrier électronique non affiliés respectivement associés à la pluralité de dispositifs de communication sans fil (104), le produit formant programme informatique comprenant :
un support de mémorisation;
des instructions informatiques stockées sur le support de mémorisation;
les instructions informatiques pouvant être exécutées par un processeur pour :
établir et maintenir une connexion (212) avec un serveur de courrier électronique (112);
recevoir des notifications de changement de courrier électronique pour la pluralité de comptes de courrier électronique non affiliés par la connexion (212);
recevoir des informations de courrier électronique associées aux notifications de changement de courrier électronique, et
pousser au moins des parties des informations de, courrier électronique pour leur réception par un dispositif de communication sans fil (104) respectif.

10. Produit formant programme informatique suivant la revendication 9, dans lequel les instructions informatiques peuvent en outre être exécutées pour établir- et maintenir une connexion (212), y compris une connexion TCP/IP.

11. Produit formant programme informatique suivant la revendication 9, dans lequel les instructions informatiques peuvent en outre être exécutées pour ouvrir une session sur le serveur de courrier électronique accessible au public (112) au nom de la pluralité de comptes de courrier électronique non affiliés pour établir la connexion (212).

12. Produit formant programme informatique suivant la revendication 9, dans lequel la connexion (212) comprend une première connexion (212), et dans lequel les instructions informatiques peuvent en outre être exécutées pour établir et maintenir une deuxième connexion (214) pour recevoir les informations de courrier électronique.

13. Produit formant programme informatique suivant la revendication 9, dans lequel les instructions informatiques peuvent en outre être exécutées pour recevoir un identificateur de serveur de courrier électronique et un identificateur de notification de courrier électronique correspondant à une notification de changement de courrier électronique, et pour envoyer à un serveur de courrier électronique (112) particulier une demande de réception d'informations de courrier électronique correspondant à la notification de changement de courrier électronique en utilisant l'identificateur de serveur de courrier électronique et l'identificateur de notification de courrier électronique.

14. Produit formant programme informatique suivant la revendication 9, dans lequel les instructions informatiques peuvent en outre être exécutées pour recevoir un identificateur de notification de courrier électronique et un paramètre de remise configurable par l'utilisateur correspondant à une notification de changement de courrier électronique, et pour pousser une partie au moins des informations de courrier électronique pour leur réception par un dispositif de communication sans fil (104) particulier sur la base du paramètre de remise configurable par l'utilisateur.

15. Système pour pousser des informations de courrier électronique vers une pluralité de dispositifs de communication sans fil (104), comprenant :
un serveur de courrier électronique (112);
le serveur de courrier électronique (112) étant configuré pour gérer une pluralité de comptes de courrier électronique non affiliés qui sont respectivement associés à la pluralité de dispositifs de communication sans fil (104);
un client de gestion de courrier électronique (166);
le client de gestion de courrier électronique (116) et le serveur de courrier électronique (112) étant configurés pour établir et maintenir une connexion (212) entre eux;
le serveur de courrier électronique (112) étant configuré pour envoyer des notifications de changement de courrier électronique par la connexion (212) pour la pluralité de comptes de courrier électronique non affiliés et le client de gestion de courrier électronique (166) étant configuré pour recevoir celles-ci;
le serveur de courrier électronique (112) étant configuré pour envoyer des informations de courrier électronique associées aux notifications de changement de courrier électronique et le client de gestion de courrier électronique (166) étant configuré pour recevoir celles-ci, et
le client de gestion de courrier électronique (166) étant configuré pour pousser au moins des parties des informations de courrier électronique pour leur réception par un dispositif de communication sans fil (104) respectif.

16. Système suivant la revendication 15, dans lequel le serveur de courrier électronique (112) comprend un premier serveur de courrier électronique accessible au public (112), le système comprenant en outre :
un deuxième serveur de courrier électronique accessible au public (114);
le deuxième serveur de courrier électronique (114) étant configuré pour gérer une pluralité de comptes de courrier électronique non affiliés qui sont respectivement associés à la pluralité de dispositifs de communication sans fil (104);
le client de gestion de courrier électronique (166) et le deuxième serveur de courrier électronique (114) étant configurés pour établir et maintenir une connexion (212) entre eux;
le deuxième serveur de courrier électronique (114) étant configuré pour envoyer des notifications de changement de courrier électronique par la connexion (212) pour la pluralité de comptes de courrier électronique non affiliés et le client de gestion de courrier électronique (166) étant configuré pour recevoir celles-ci;
le deuxième serveur de courrier électronique (114) étant configuré pour envoyer des informations de courrier électronique associées aux notifications de changement de courrier électronique et le client de gestion de courrier électronique (166) étant configuré pour recevoir celles-ci, et
le client de gestion de courrier électronique (166) étant configuré pour pousser au moins des parties des informations de courrier électronique pour leur réception par la pluralité de dispositifs de communication sans fil (104).

17. Système suivant la revendication 15, dans lequel le serveur de courrier électronique (112) comprend un serveur IMAP (Internet Message Access Protocol/protocole d'accès aux messages Internet).

18. Système suivant la revendication 15, dans lequel le client de gestion de courrier électronique (166) et le serveur de courrier électronique (112) sont en outre configurés pour établir et maintenir une connexion (212), y compris une connexion TCP/IP (212).

19. Système suivant la revendication 15, dans lequel le client de gestion de courrier électronique (166) est en outre configuré pour ouvrir une session sur le serveur de courrier électronique (112) au nom de la pluralité de comptes de courrier électronique non affiliés pour établir la connexion (212).

20. Système suivant la revendication 15, dans lequel la connexion (212) comprend une première connexion (212), et dans lequel le serveur de courrier électronique (112) et le client de gestion de courrier électronique (166) sont en outre configurés pour établir et maintenir une deuxième connexion (214) pour envoyer et recevoir les informations de courrier électronique.

21. Système suivant la revendication 15, comprenant en outre :
le client de gestion de courrier électronique (166) étant en outre configuré pour recevoir un identificateur de serveur de courrier électronique et un identificateur de notification de courrier électronique pour chaque notification de changement de courrier électronique reçue;
le client de gestion de courrier électronique (166) étant en outre configuré pour envoyer, à un serveur de courrier électronique particulier, une commande pour recevoir des informations de courrier électronique correspondant à la notification de changement de courrier électronique particulière en utilisant l'identificateur de serveur de courrier électronique et l'identificateur de notification de courrier électronique.

22. Système suivant la revendication 15, comprenant en outre :
dans lequel le serveur de courrier électronique (112) est en outre configuré pour envoyer un identificateur de notification de courrier électronique pour chaque notification de changement de courrier électronique;
dans lequel le client de gestion de courrier électronique (166) est configuré pour récupérer un paramètre de remise configurable par l'utilisateur, et
dans lequel le client de gestion de courrier électronique (166) est en outre configuré pour pousser une partie au moins des informations de courrier électronique pour leur réception par un dispositif de communication sans fil (104) particulier sur la base du paramètre de remise configurable par l'utilisateur.

23. Système suivant la revendication 15, comprenant en outre :
une pluralité de serveurs de courrier électronique (102);
chaque serveur de courrier électronique (102) étant configuré pour gérer une pluralité de comptes de courrier électronique non affiliés qui sont respectivement associés à la pluralité de dispositifs de communication sans fil (104);
le client de gestion de courrier électronique (166) étant configuré pour ouvrir une session sur chaque serveur de courrier électronique (102) au nom de la pluralité de comptes de courrier électronique non affiliés et établir et maintenir une connexion (212) avec ceux-ci;
chaque serveur de courrier électronique (102) étant configuré pour envoyer des informations de notification de changement de courrier électronique pour la pluralité de comptes de courrier électronique non affiliés par la connexion (212) et le client de gestion de courrier électronique (166) étant configuré pour recevoir celles-ci, dans lequel les informations de notification de changement de courrier électronique comprennent un identificateur de serveur de courrier électronique et un identificateur de notification de courrier électronique;
chaque serveur de courrier électronique (102) étant configuré pour envoyer des informations de courrier électronique associées aux informations de notification de changement de courrier électronique et le client de gestion de courrier électronique (166) étant configuré pour recevoir celles-ci, et
le client de gestion de courrier électronique (166) étant configuré pour pousser au moins des parties des informations de courrier électronique pour leur réception pratiquement en temps réel par la pluralité de dispositifs de communication sans fil (104).

24. Système suivant la revendication 23, comprenant en outre :
dans lequel le client de gestion de courrier électronique (166) est en outre configuré pour recevoir un paramètre de remise configurable par l'utilisateur, et
le client de gestion de courrier électronique (166) étant en outre configuré pour déterminer si des informations de courrier électronique doivent être poussées sur la base des paramètres de remise configurables par l'utilisateur et/ou lesquelles.

25. Système suivant la revendication 23, comprenant en outre :
dans lequel le client de gestion de courrier électronique (166) est en outre configuré pour recevoir un paramètre de remise configurable par l'utilisateur;
le client de gestion de courrier électronique (166) étant en outre configuré pour déterminer si des informations de courrier électronique doivent être poussées sur la base des paramètres de remise configurables par l'utilisateur et/ou lesquelles, et
le client de gestion de courrier électronique (166) étant en outre configuré pour demander des informations de courrier électronique de chaque serveur de courrier électronique (102) s'il détermine que les informations de courrier électronique doivent être poussées sur la base des paramètres de remise configurables par l'utilisateur.

26. Système suivant l'une quelconque des revendications 15 à 25, dans lequel le serveur de courrier électronique (112) est accessible au public.

27. Client de gestion de courrier électronique (166) permettant de pousser des informations de courrier électronique d'un serveur de courrier électronique (112) vers une pluralité de dispositifs de communication sans fil (104), le serveur de courrier électronique (112) gérant une pluralité de comptes de courrier électronique non affiliés respectivement associés à la pluralité de dispositifs de communication sans fil (104), le client de gestion de courrier électronique (166) étant à même de :
établir et maintenir une connexion (212) avec le serveur de courrier électronique (112);
recevoir, par la connexion (212), des notifications de changement de courrier électronique pour la pluralité de comptes de courrier électronique non affiliés;
recevoir des informations de courrier électronique associées aux notifications de changement de courrier électronique, et
pousser au moins des parties des informations de courrier électronique pour leur réception par un dispositif de communication sans fil (104) respectif.
